# FASCICULE DE BREVET EUROPEEN

(11) **EP 3 781 433 B1**
(45) Date de publication et mention de la délivrance du brevet: **01.06.2022**
(21) Numéro de dépôt: 19715906.4
(22) Date de dépôt: 03.04.2019
(51) Int. Cl.: B60N 2/42, B64D 25/04, B60N 2/427, B60N 2/433, B64D 11/06, B60N 2/30

(54) **SYSTÈME DE DÉVERROUILLAGE PAR INERTIE D'UN DOSSIER DE SIÈGE**
SYSTEM ZUR VERRIEGELUNG EINES SITZRÜCKES DURCH TRÄGHEIT
SYSTEM FOR INERTIALLY UNLOCKING A SEAT BACK

(30) Priorité: 19.04.2018 FR 1853462
(43) Date de publication de la demande: 24.02.2021
(73) Titulaire: Safran Seats, 78370 Plaisir (FR)
(72) Inventeur: MARAIS, Jean-Charles, 36260 Sainte Lizaigne (FR); LEFEVRE, Olivier, 41130 Selles sur Cher (FR); GUIRIMAND, Anne, 18120 Mereau (FR)
(74) Mandataire: Marconnet, Sébastien
(86) Numéro de dépôt international: PCT/EP2019/058396
(87) Numéro de publication internationale: WO 2019/201604

(56) Documents cités:
- EP-A1- 0 832 780
- EP-A1- 0 945 302
- EP-A2- 2 610 178
- FR-B1- 2 857 305
- US-A- 5 320 308
- US-A1- 2017 152 048

## Description

La présente invention porte sur un système de déverrouillage par inertie d'un dossier de siège. L'invention trouve une application particulièrement avantageuse avec les sièges d'aéronef, mais pourrait également être mise en œuvre avec les sièges d'autres moyens de transport, tels que les sièges de véhicules automobiles notamment.

Afin d'assurer un niveau de sécurité élevé, les sièges d'aéronef sont soumis à des essais représentatifs d'un accident aérien. Parmi ces essais, des critères importants sont la trajectoire et le niveau de force de choc subis par le passager. En particulier, le critère d'impact de tête dit HIC, acronyme pour "Head Injury Criterion" en anglais, correspond à un score qui ne doit pas dépasser une valeur seuil. Ce score HIC dépend de valeurs maximum des décélérations vues par la tête du passager lors d'un choc ainsi que de bornes temporelles d'une courbe de décélération calculée lors du test.

Afin de remplir ce critère d'impact, il est important que le dossier n'oppose pas trop de résistance à la tête du passager qui est projetée contre celui-ci lors du test. Par ailleurs, le dossier du siège doit pouvoir supporter des efforts importants pour sa vie en service ainsi que lors d'une phase d'évacuation, dans la mesure où il doit être maintenu de manière stable en position relevée afin d'éviter d'entraver le passage vers une sortie de secours. Le siège doit également pouvoir supporter une contrainte statique pouvant atteindre 150daN pour les usages de vie série et les chargements abusifs en cas d'évacuation. US 2017/152048 et EP 0945302 divulguent des dossiers de siège.

L'invention, selon la revendication 1, vise à respecter ces trois contraintes pouvant paraître antagonistes en proposant un système de déverrouillage par inertie d'un dossier de siège d'aéronef, caractérisé en ce qu'il comporte:
- un élément structurel du dossier appelé bielle,
- une pièce de support destinée à être fixée sur un élément structurel dudit siège,
- un axe de rotation de la bielle par rapport à la pièce de support,
- la pièce de support comportant une masselotte mobile en translation entre:
- une position de verrouillage dans laquelle la masselotte est en regard d'une lèvre de la bielle de manière à empêcher une rotation de la bielle par rapport à la pièce de support autour de l'axe de rotation, et
- une position de déverrouillage dans laquelle la masselotte est dégagée de la lèvre de la bielle de manière à autoriser une rotation de la bielle par rapport à la pièce de support autour de l'axe de rotation,
- le passage de la position de verrouillage à la position de déverrouillage de la masselotte étant apte à être réalisé sous l'action d'une décélération subie par le siège.

L'invention permet ainsi, en autorisant la rotation du dossier en cas de crash, d'opposer une résistance définie à la tête du passager qui est projetée vers l'avant. On limite ainsi le niveau d'accélération subi par la tête du passager afin de minimiser le score du critère HIC. Par ailleurs, lors d'une phase d'évacuation, la masselotte se remettra en position verrouillée de manière à bloquer en rotation le dossier lorsque ce dernier est déplacé en position relevée afin de faciliter l'accès aux sorties de secours.

Selon une réalisation, un ressort de rappel sollicite la masselotte dans sa position de verrouillage lorsque le siège ne subit pas de décélération.

Selon une réalisation, la lèvre présente une forme configurée pour repousser la masselotte vers sa position de déverrouillage lorsque la bielle est déplacée d'une position inclinée extrême vers une position relevée.

Selon une réalisation, ledit système comporte au moins un organe fusible configuré pour retenir le dossier sous son propre poids lors d'une phase de décélération.

Selon une réalisation, l'organe fusible prend la forme d'une goupille insérée à l'intérieur d'ouvertures en coïncidence ménagées dans la bielle et la pièce de support.

Selon une réalisation, la masselotte est montée à l'extrémité d'une tige insérée à l'intérieur d'une douille de guidage.

Selon une réalisation, la douille de guidage est insérée à l'intérieur d'une cavité borgne.

Selon une réalisation, un palier de guidage est interposé radialement entre la tige et une périphérie interne de la douille de guidage.

Selon une réalisation, le ressort de rappel est en appui par une de ses extrémités contre le palier de guidage et par l'autre de ses extrémités contre la masselotte.

Selon une réalisation, en position de verrouillage, la masselotte est en appui contre un fond de la cavité.

Selon une réalisation, la douille de guidage comporte un épaulement en périphérie externe destiné à gérer une profondeur de la position de déverrouillage de la masselotte.

L'invention a également pour objet un siège d'aéronef caractérisé en ce qu'il comporte une assise, au moins un dossier, et un système de déverrouillage par inertie dudit dossier tel que précédemment défini.

Selon une réalisation, le système de déverrouillage par inertie est monté entre le dossier et un élément structurel du siège.

Selon une réalisation, l'élément structurel du siège est une crosse.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
- Les figures 1a et 1b sont des vue en perspective de face et de dos d'un siège d'aéronef intégrant un système de déverrouillage par inertie d'un dossier selon la présente invention;
- La figure 2 est une vue en perspective détaillée du système de déverrouillage par inertie d'un dossier selon la présente invention;
- Les figures 3a à 9c sont des vues du siège ainsi que des vues de côté et en coupe illustrant le fonctionnement du système de déverrouillage par inertie d'un dossier selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

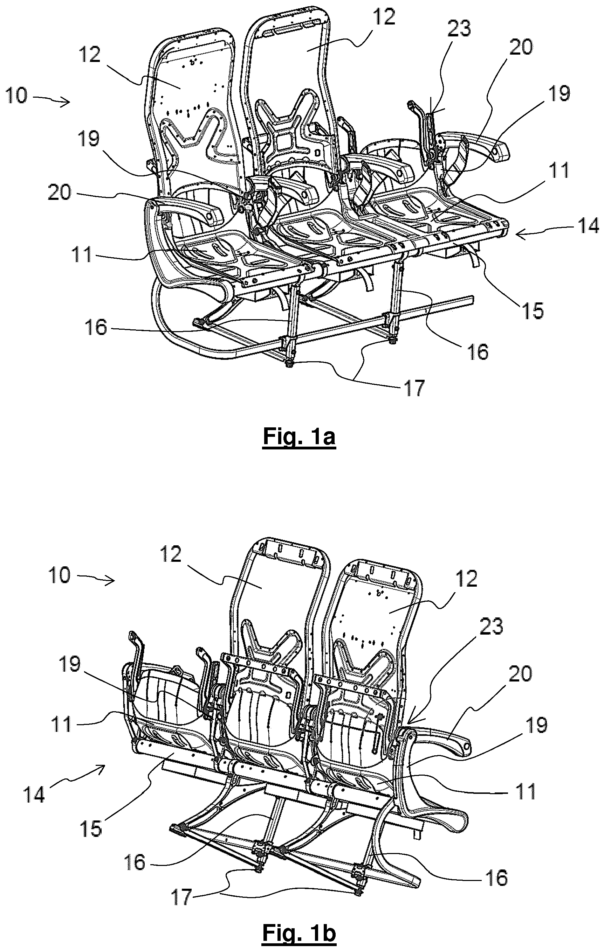

Les figures 1a et 1b montrent un siège 10 destiné à être installé dans une cabine aéronef. Le siège 10 comporte au moins une assise 11 et au moins un dossier 12 définissant une place. En l'occurrence, le siège 10 comporte trois places. Ce nombre de places pourra bien entendu être adapté en fonction du besoin.

Les assises 11 et les dossiers 12 sont montés sur une structure de siège 14. Cette structure de siège 14 comporte des poutres 15 de renforcement transversal des assises 11. Des pieds de support 16 sont destinés à supporter l'assise 11. Ces pieds de support 16 sont munis de verrous 17 pour assurer la fixation par serrage du siège 10 sur des rails (non représentés) disposés sur le plancher de la cabine d'aéronef.

Des crosses 19 portant des accoudoirs 20 sont disposées entre les assises 11 ainsi qu'aux extrémités du siège 10. Les accoudoirs 20 pourront être montés mobiles en rotation ou fixe par rapport aux crosses 19.

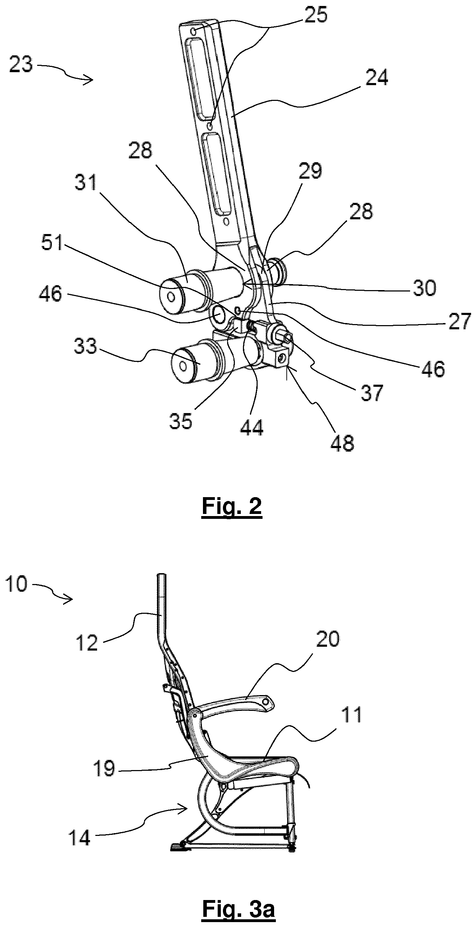

Un système 23 de déverrouillage par inertie d'un dossier 12 est interposé entre un dossier 12 et un élément structurel du siège 10. Comme on peut le voir sur la figure 2, ce système 23 comporte un élément structurel 24 du dossier appelé bielle 24. La bielle 24 de forme allongée pourra être fixée au moyen d'organes de fixation, tels que des vis ou des rivets notamment, insérés dans des trous de fixation 25 ménagés suivant sa longueur. En outre, une pièce de support 27 est destinée à être fixée sur l'élément structurel du siège 10, en l'occurrence une crosse 19.

Plus précisément, la bielle 24 comporte deux jambes 28 disposées de part et d'autre d'une portion saillante 29 de la pièce de support 27. Les jambes 28 ainsi que la portion saillante 29 sont munies d'une ouverture traversante 30 pour le passage d'un axe de rotation 31 de la bielle 24 par rapport à la pièce de support 27. L'axe de rotation 31 est destiné à être fixé sur la crosse 19. Un deuxième axe 33 traversant la pièce de support 27 assure la fixation de l'assise 11 sur la crosse 19.

La pièce de support 27 comporte une masselotte 35 montée à l'extrémité d'une tige 36 insérée à l'intérieur d'une douille de guidage 37. La masselotte 35 pourra être fixée sur la tige 36 par exemple par emmanchement en force ou par vissage ou tout autre moyen de fixation adapté à l'application.

La douille de guidage 37 ainsi que la tige 36 sont disposées à l'intérieur d'une cavité borgne 40. La douille de guidage 37 comporte un épaulement 41 en périphérie externe destiné à gérer une profondeur de la position de déverrouillage de la masselotte 35.

Un palier de guidage 42, tel qu'un coussinet, est interposé radialement entre la tige 36 et une périphérie interne de la douille de guidage 37. Le palier de guidage 42 est réalisé dans un matériau à faible coefficient de frottement, par exemple en "iglidur" (Marque déposée), afin de faciliter le déplacement en translation de la tige 36.

Un ressort de rappel 44 disposé autour de la tige 36 présente une extrémité venant en appui contre la masselotte 35. L'autre extrémité insérée à l'intérieur de la douille de guidage 37 vient en appui contre le palier de guidage 42. Le palier 42 est en appui contre un épaulement interne 45 de la douille de guidage 37 défini par une différence de diamètre de la périphérie interne de la douille de guidage 37.

En outre, au moins un organe fusible 46 est configuré pour retenir le dossier 12 sous son propre poids lors d'une phase de décélération. Dans l'exemple représenté, on utilise deux organes fusibles 46 destinés à travailler en cisaillement lors de l'inclinaison du siège 10. Les organes fusibles 46 prennent la forme de goupilles cylindriques pleines insérées à l'intérieur d'ouvertures en coïncidence ménagées dans la bielle 24 et la pièce de support 27. Les goupilles 46 sont avantageusement réalisées dans un matériau plastique. La résistance au cisaillement des goupilles 46 dépend notamment du poids du dossier 12 et de l'écartement entre le siège comportant le dossier 12 et le siège arrière qui reçoit le passager dont la tête va entrer en collision avec le dossier 12. Dans un exemple de réalisation, les goupilles 46 présentent une résistance au cisaillement comprise entre 5000 et 30000 Newtons.

On pourra également utiliser un système de réglage 48 de l'inclinaison du dossier 12. Ce système de réglage 48 comporte en l'occurrence deux vis de réglage 49 permettent de régler la position de l'axe 33 à l'intérieur d'un trou oblong 50 et donc l'inclinaison du dossier 12 en position initiale.

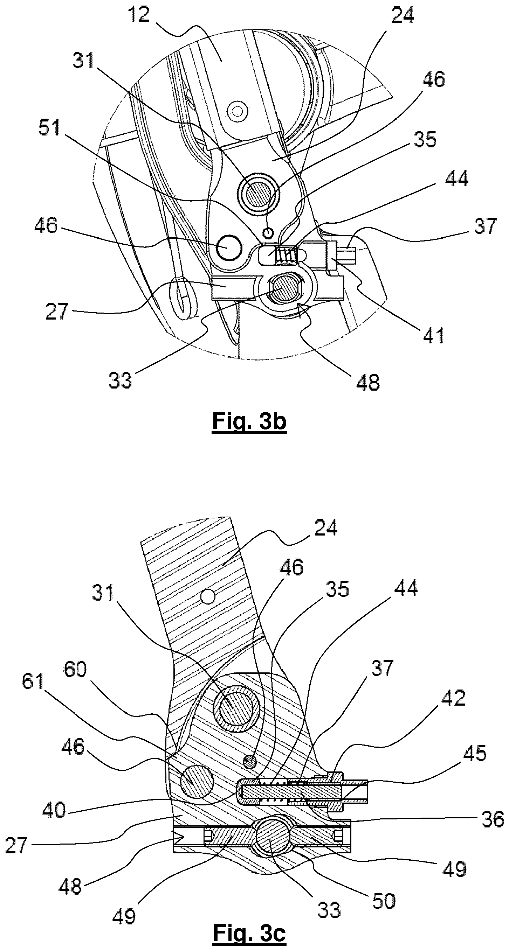

On décrit ci-après en référence avec les figures 3a à 9c, le fonctionnement du système 23 de déverrouillage par inertie

Comme cela est illustré par les figures 3a à 3c, lorsque le siège 10 n'est soumis à aucun effort ou subit une accélération, le ressort de rappel 44 sollicite la masselotte 35 dans une position de verrouillage. Dans cette position de verrouillage, la masselotte 35 est en regard d'une lèvre 51 de la bielle 24 de manière à empêcher une rotation de la bielle 24 par rapport à la pièce de support 27 autour de l'axe de rotation 31. A cet effet, la masselotte 35 s'étend en saillie transversale par rapport à la cavité 40 ménagée dans l'épaisseur de manière à être disposée en regard de la lèvre 51. La masselotte 35 est en butée contre le fond de la cavité borgne 40. La bielle 24 et le dossier 12 sont en position relevée.

Dans un cas de fonctionnement statique, lorsqu'une force est appliquée sur le dossier 24 de l'arrière vers l'avant, les goupilles 46 en matière plastique admettent une déformation, de sorte que la lèvre 51 vient en appui sur la masselotte 35. La lèvre 51 bloque ainsi la rotation du dossier 24 qui pourra supporter des efforts importants pour les usages de vie série et les chargements abusifs en cas d'évacuation.

Dans un cas de fonctionnement statique, lorsqu'une force est appliquée sur le dossier de l'avant vers l'arrière, un épaulement 60 de la bielle 24 vient en appui contre une zone de contact 61 correspondante ménagée dans la pièce de support 27, tel que montré sur la figure 3c. Le blocage en rotation du dossier 24 est efficace pour supporter des efforts importants pour les usages de vie série et les chargements abusifs en cas d'évacuation.

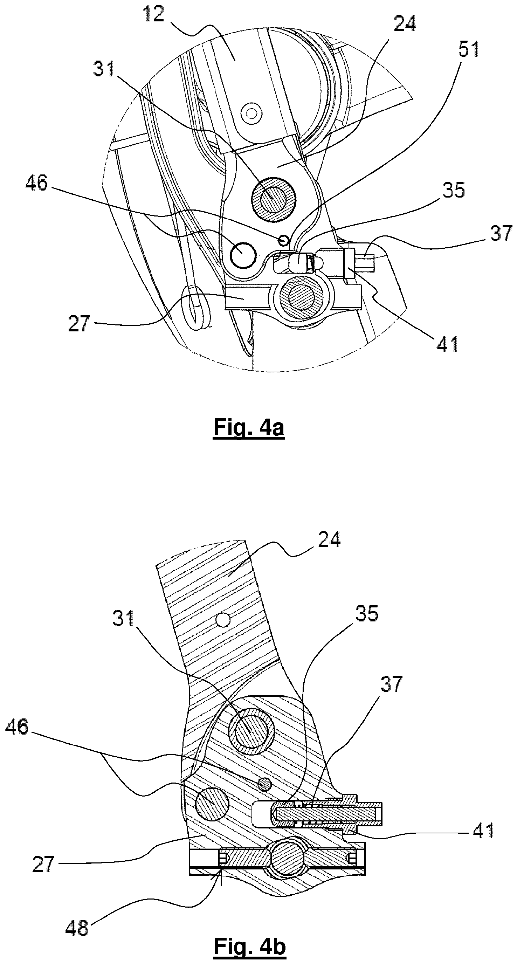

On explique ci-après un cas de fonctionnement dynamique du système 23 déverrouillage par inertie du dossier. Comme cela est illustré par les figures 4a et 4b, sous l'effet d'une décélération, la masselotte 35 commence à compresser le ressort 44 du fait de son déplacement en translation à l'intérieur de la cavité 40. Par ailleurs, la rotation de la bielle 24 est bloquée par les goupilles 46 fusibles, de sorte que la lèvre 51 n'est pas en contact avec la masselotte 35 et ne bloque donc pas son déplacement en translation.

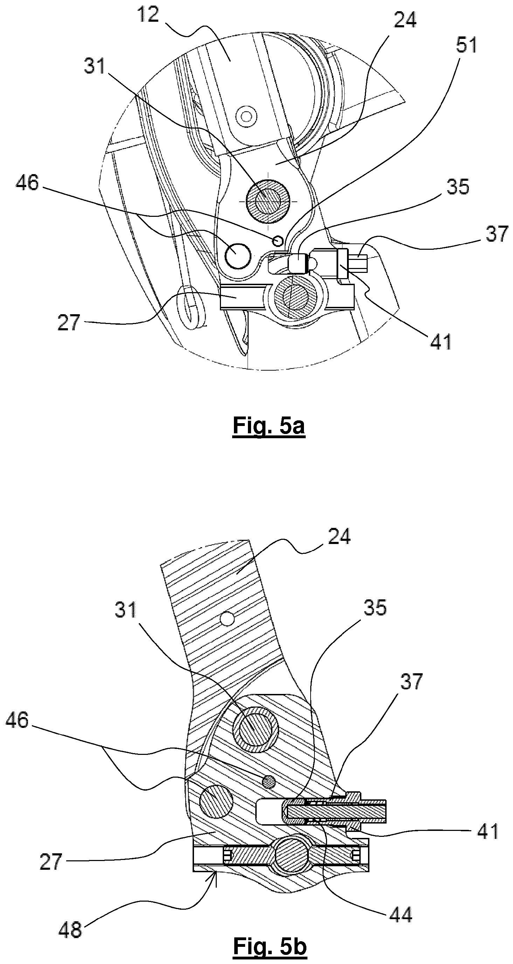

Comme cela est illustré par les figures 5a et 5b, la masselotte 35 passe dans une position de déverrouillage dans laquelle la masselotte 35 est dégagée de la lèvre 51 de la bielle 24. La masselotte 35 atteint alors sa course maximale et vient en appui contre une extrémité de la douille de guidage 37. La rotation de la bielle 24 est encore bloquée par les goupilles fusibles 46.

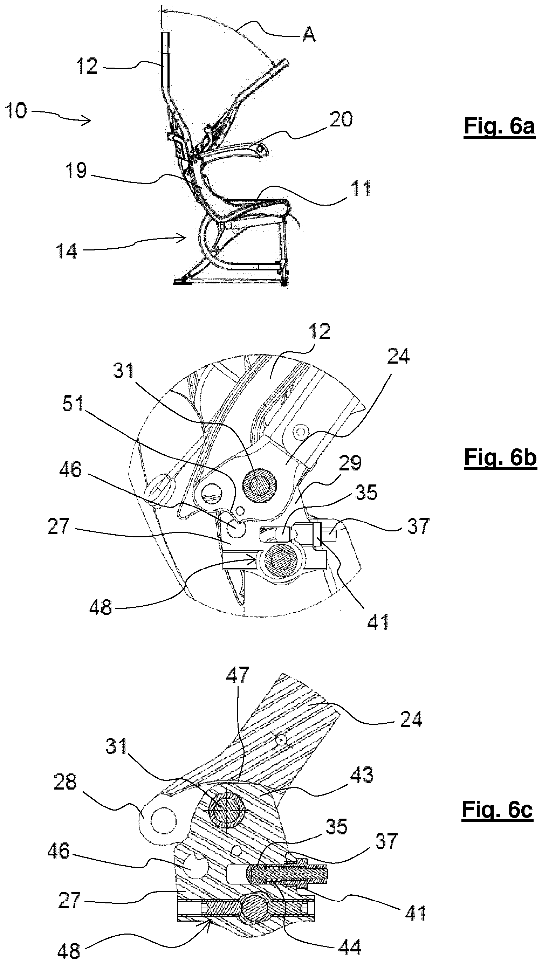

Comme cela est illustré par les figures 6a à 6c, lors d'un impact de la tête du passager sur le dossier 12, la transmission de l'effort du haut vers le bas du dossier 12 a pour effet de casser les goupilles 46 fusibles, dans la mesure où ces dernières sont dimensionnées pour retenir uniquement le dossier 12 sous son propre poids.

Le dossier 12 peut alors tourner vers l'avant du fait du dégagement de la masselotte 35 par rapport à la lèvre 51 de la bielle 24. En effet, la position déverrouillée de la masselotte 35 autorise une rotation de la bielle 24 par rapport à la pièce de support 27 autour de l'axe de rotation 31. A la fin du déplacement, le dossier 12 et la bielle 24 se trouvent dans une position inclinée extrême.

L'angle de débattement A du dossier 12 est défini par une géométrie du bord supérieur 43 de la pièce de support 27 et du fond incurvé 47 de l'espace entre les deux jambes 28, tel que montré sur la figure 6c. L'angle de débattement A est compris par exemple entre 40 et 60 degrés.

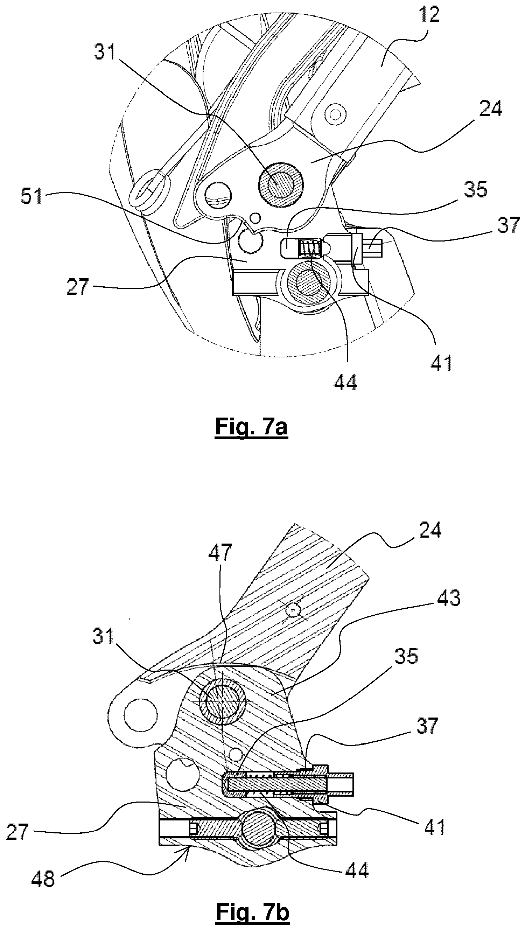

Comme cela est illustré par les figures 7a et 7b, lorsque la période de décélération est terminée, le ressort 44 repousse la masselotte 35 en position de verrouillage.

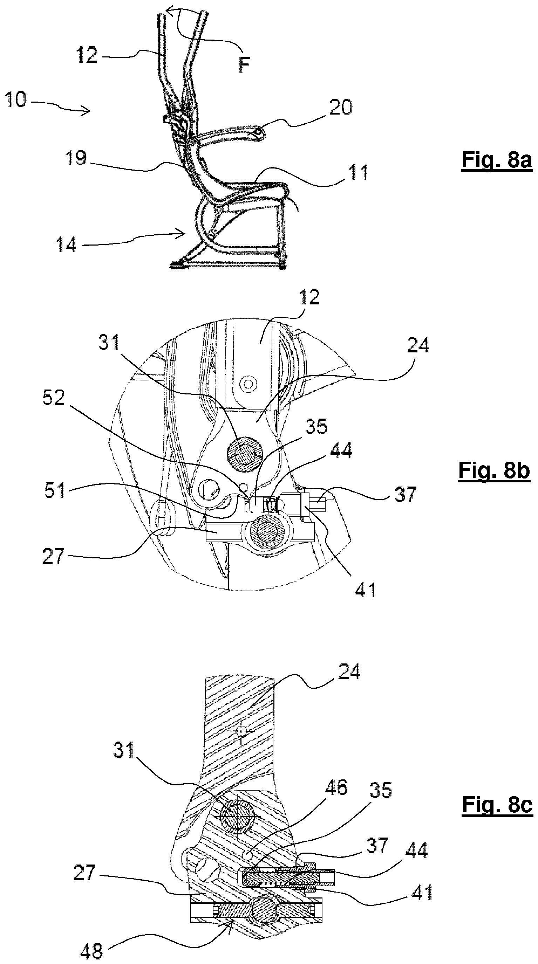

Comme cela est illustré par les figures 8a à 8c, lorsque le dossier 12 et donc la bielle 24 est déplacée, suivant la flèche F, de la position inclinée extrême vers une position relevée, la lèvre 51 présente une forme 52, notamment un coin, configuré pour repousser la masselotte 35 vers sa position de déverrouillage en contraignant le ressort 44.

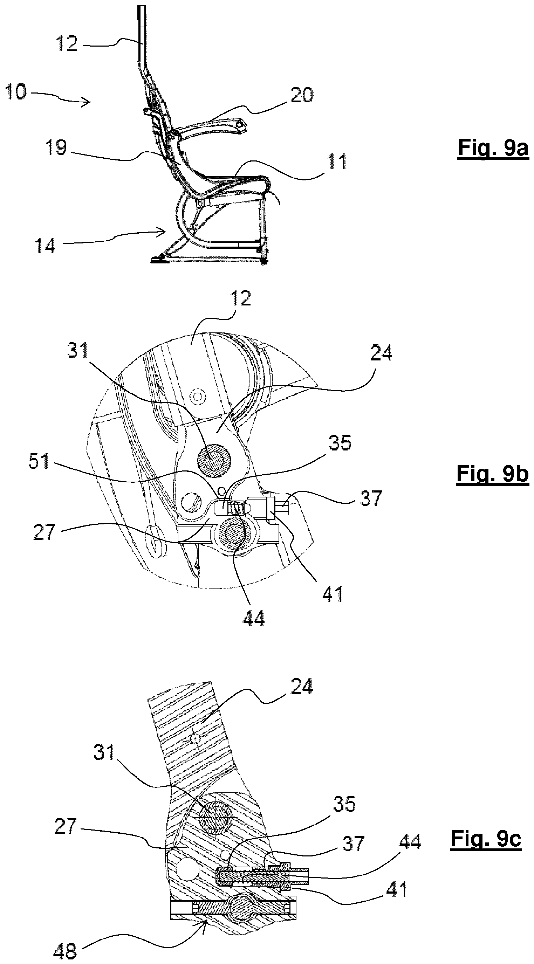

Comme cela est illustré par les figures 9a à 9c, une fois que le dossier 12 est en position relevée, le coin se dégage de la masselotte 35 en passant au-dessus de la masselotte 35. Le ressort 44 repousse alors la masselotte 35 en position verrouillée. Le dossier 12 est alors bloqué en rotation et peut résister à des efforts statiques. On garantit ainsi que le dossier 12 sera maintenu en position relevée et n'entravera pas l'accès aux sorties de secours.

Dans un fonctionnement dégradé du système de déverrouillage par inertie d'un dossier 23, il serait possible de supprimer le ressort de rappel 44 et/ou les goupilles fusibles 46.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications.

## Revendications

1. Système (23) de déverrouillage par inertie d'un dossier (12), notamment de siège d'aéronef (10), comportant:
- un élément structurel du dossier (24) appelé bielle,
- une pièce de support (27) destinée à être fixée sur un élément structurel dudit siège (10),
- un axe de rotation (31) de la bielle (24) par rapport à la pièce de support (27),
- la pièce de support (27) comportant une masselotte (35) mobile en translation entre:
- une position de verrouillage dans laquelle la masselotte (35) est en regard d'une lèvre (51) de la bielle (24) de manière à empêcher une rotation de la bielle (24) par rapport à la pièce de support (27) autour de l'axe de rotation (31), et
- une position de déverrouillage dans laquelle la masselotte (35) est dégagée de la lèvre (51) de la bielle (24) de manière à autoriser une rotation de la bielle (24) par rapport à la pièce de support (27) autour de l'axe de rotation (31),
- le passage de la position de verrouillage à la position de déverrouillage de la masselotte étant apte à être réalisé sous l'action d'une décélération subie par le siège.

2. Système selon la revendication 1, dans lequel un ressort de rappel (44) sollicite la masselotte (35) dans sa position de verrouillage lorsque le siège (10) ne subit pas de décélération.

3. Système selon la revendication 1 ou 2, dans lequel la lèvre (51) présente une forme (52) configurée pour repousser la masselotte (35) vers sa position de déverrouillage lorsque la bielle (24) est déplacée d'une position inclinée extrême vers une position relevée.

4. Système selon l'une quelconque des revendications 1 à 3, comportant au moins un organe fusible (46) configuré pour retenir le dossier (12) sous son propre poids lors d'une phase de décélération.

5. Système selon la revendication 4, dans lequel l'organe fusible (46) prend la forme d'une goupille (46) insérée à l'intérieur d'ouvertures en coïncidence ménagées dans la bielle (24) et la pièce de support (27).

6. Système selon l'une quelconque des revendications 1 à 5, dans lequel la masselotte (35) est montée à l'extrémité d'une tige (36) insérée à l'intérieur d'une douille de guidage (37).

7. Système selon la revendication 6, dans lequel la douille de guidage (37) est insérée à l'intérieur d'une cavité borgne (40).

8. Système selon la revendication 6 ou 7, dans lequel un palier de guidage (42) est interposé radialement entre la tige (36) et une périphérie interne de la douille de guidage (37).

9. Système selon les revendications 2 et 8, dans lequel le ressort de rappel (44) est en appui par une de ses extrémités contre le palier de guidage (42) et par l'autre de ses extrémités contre la masselotte (35).

10. Système selon les revendications 7 et 9, dans lequel, en position de verrouillage, la masselotte (35) est en appui contre un fond de la cavité (40).

11. Système selon la revendication 7, dans lequel la douille de guidage (37) comporte un épaulement (41) destiné à gérer une profondeur de la position de déverrouillage de la masselotte (35).

12. Siège (10) d'aéronef comportant une assise (11), au moins un dossier (12), et un système (23) de déverrouillage par inertie dudit dossier (12) tel que défini selon l'une quelconque des revendications précédentes.

13. Siège (10) selon la revendication 12, dans lequel le système (23) de déverrouillage par inertie est monté entre le dossier (12) et un élément structurel du siège (10).

14. Siège (10) selon la revendication 13, dans lequel l'élément structurel du siège (10) est une crosse (19).

## Patentansprüche

1. System (23) zum Trägheitsentriegeln einer Rückenlehne (12), insbesondere eines Flugzeugsitzes (10), umfassend:
- ein Rücklehnenstrukturelement (24), sogenannte Koppel,
- ein Stützteil (27) zur Befestigung an einem Strukturelement des Sitzes (10),
- eine Drehachse (31) der Koppel (24) relativ zum Stützteil (27),
- wobei das Stützteil (27) ein Gewicht (35) umfasst, das translatorisch bewegbar ist zwischen:
- einer Verriegelungsposition, in der das Gewicht (35) einer Lippe (51) der Koppel (24) zugewandt ist, um die Rotation der Koppel (24) relativ zum Stützteil (27) um die Drehachse (31) zu verhindern, und
- einer Entriegelungsposition, in der das Gewicht (35) von der Lippe (51) der Koppel (24) entfernt ist, um eine Rotation der Koppel (24) relativ zum Stützteil (27) um die Drehachse (31) zu ermöglichen,
- wobei der Übergang von der Verriegelungsposition in die Entriegelungsposition des Gewichts aufgrund einer Verzögerung des Sitzes möglich ist.

2. System nach Anspruch 1, wobei eine Rückstellfeder (44) das Gewicht (35) in seine Verriegelungsposition drängt, wenn der Sitz (10) nicht verzögert wird.

3. System nach Anspruch 1 oder 2, wobei die Lippe (51) eine Form (52) aufweist, die so konfiguriert ist, dass sie das Gewicht (35) in Richtung seiner entriegelten Position drückt, wenn die Koppel (24) von einer extrem geneigten Position in eine erhöhte Position bewegt wird.

4. System nach einem der Ansprüche 1 bis 3, umfassend mindestens ein schmelzbares Element (46), das so konfiguriert ist, dass es die Rückenlehne (12) unter deren Eigengewicht während einer Verzögerungsphase hält.

5. System nach Anspruch 4, wobei das schmelzbare Element (46) die Form eines Stifts (46) aufweist, der in zusammenfallende Öffnungen in der Koppel (24) und dem Stützteil (27) eingesetzt ist.

6. System nach einem der Ansprüche 1 bis 5, wobei das Gewicht (35) am Ende einer Stange (36) angebracht ist, die in eine Führungshülse (37) eingeführt ist.

7. System nach Anspruch 6, wobei die Führungshülse (37) in einen Blindhohlraum (40) eingesetzt ist.

8. System nach Anspruch 6 oder 7, wobei ein Führungslager (42) radial zwischen der Stange (36) und einem Innenumfang der Führungshülse (37) angeordnet ist.

9. System nach den Ansprüchen 2 und 8, **dadurch gekennzeichnet, dass** die Rückstellfeder (44) einenends am Führungslager (42) und anderenends am Gewicht (35) anliegt.

10. System nach den Ansprüchen 7 und 9, wobei das Gewicht (35) in der Verriegelungsposition an einem Boden des Hohlraums (40) anliegt.

11. System nach Anspruch 7, wobei die Führungshülse (37) eine Schulter (41) zum Steuern einer Tiefe der Entriegelungsposition des Gewichts (35) umfasst.

12. Flugzeugsitz (10) mit einer Sitzfläche (11), mindestens einer Rückenlehne (12) und einem System (23) zum Trägheitsentriegeln der Rückenlehne (12) nach einem der vorhergehenden Ansprüche.

13. Sitz (10) nach Anspruch 12, wobei das System (23) zum Trägheitsentriegeln zwischen der Rückenlehne (12) und einem Strukturelement des Sitzes (10) montiert ist.

14. Sitz (10) nach Anspruch 13, wobei das Strukturelement des Sitzes (10) ein Kolbenstab (19) ist.

## Claims

1. A system (23) for unlocking by inertia a backrest (12), in particular an aircraft seat (10), comprising:
- a backrest structural element (24), so-called rod,
- a support part (27) to be fixed on a structural element of said seat (10),
- an axis of rotation (31) of the rod (24) relative to the support part (27),
- the support part (27) comprising a weight (35) movable in translation between:
- a locking position, in which the weight (35) faces a lip (51) of the rod (24) so as to prevent the rod (24) from rotating relative to the support part (27) around the axis of rotation (31), and
- an unlocking position, in which the weight (35) is disengaged from the lip (51) of the rod (24) so as to allow the rod (24) to rotate relative to the support part (27) around the axis of rotation (31),
- the transition from the locking position to the unlocking position of the weight being possible due to a deceleration of the seat.

2. The system according to claim 1, wherein a return spring (44) urges the weight (35) into the locking position thereof when the seat (10) is not decelerating.

3. The system according to claim 1 or 2, wherein the lip (51) has a shape (52) configured to push the weight (35) towards the unlocked position thereof when the rod (24) is moved from an extreme inclined position to a raised position.

4. The system according to any one of the claims 1 to 3, comprising at least one fusible member (46) configured to retain the backrest (12) under the dead load thereof during a deceleration phase.

5. The system according to claim 4, wherein the fusible member (46) has the form of a pin (46) inserted into coincident openings made in the rod (24) and the support part (27) .

6. The system according to any one of the claims 1 to 5, wherein the weight (35) is mounted at the end of a rod (36) inserted into a guide sleeve (37).

7. The system according to claim 6, wherein the guide sleeve (37) is inserted into a blind cavity (40).

8. The system according to claim 6 or 7, wherein a guide bearing (42) is interposed radially between the rod (36) and an inner periphery of the guide sleeve (37).

9. The system according to claims 2 and 8, wherein the return spring (44) bears at one end against the guide bearing (42) and at the other end against the weight (35).

10. The system according to claims 7 and 9, wherein, in the locking position, the weight (35) bears against a bottom of the cavity (40).

11. The system according to claim 7, wherein the guide sleeve (37) comprises a shoulder (41) for controlling a depth of the unlocking position of the weight (35).

12. An aircraft seat (10) comprising a seating area (11), at least one backrest (12), and a system (23) for unlocking by inertia said backrest (12) as defined according to any one of the preceding claims.

13. The seat (10) according to claim 12, wherein the system (23) for unlocking by inertia is mounted between the backrest (12) and a structural element of the seat (10).

14. The seat (10) according to claim 13, wherein the structural element of the seat (10) is a butt-type bar (19).
